# EUROPEAN PATENT APPLICATION

(11) **EP 1 923 407 A1**
(43) Date of publication of application: **21.05.2008**
(21) Application number: 06023679.1
(22) Date of filing: 14.11.2006
(51) Int. Cl.: C08F 10/06, C08L 23/10, C08J 5/18, C08F 8/50

(54) **Biaxially oriented polypropylene film having improved processabilty**

(71) Applicant: Borealis Technology Oy, 06101 Porvoo (FI)
(72) Inventor: Ackermans, Nina, 3980 Tessenderlo (BE); Jacobs, Franck, 9940 Evergem (BE); Broeders, Bert, 3550 Heusden (BE); Boelaers, Guido, 3900 Overpelt (BE)
(74) Representative: Kador & Partner

(57) **Abstract**

The present invention provides a biaxially oriented polypropylene film (BOPP) suitable for numerous applications including packaging, capacitor films and industrial applications. In particular the present invention relates to a BOPP film which has an improved processability.

## Description

The present invention provides a biaxially oriented polypropylene film (BOPP) suitable for numerous applications including packaging, capacitor films and industrial applications. In particular the present invention relates to a BOPP film which has an improved processability.

Biaxially oriented polypropylene films are widely used for household or industrial applications, since they are excellent in optical properties such as clarity and gloss, mechanical properties such as tensile strength and elongation, moisture barrier as well as dielectric properties.

Biaxially oriented polypropylene films can be made via two different processes - tubular (bubble) or tenter frame process. Both processes were used early in commercial production of biaxially oriented polypropylene films and both are still used today (Edward P. Moore, Jr., Polypropylene Handbook, Hanser Publishers, 1996, 374 to 375).

The tubular frame process is favoured to produce very thin films.

The tenter frame process is more common due to the lower variable costs resulting from very high output and wider availability of the technology than the tubular frame processes (Edward P. Moore, Jr., Polypropylene Handbook, Hanser Publishers, 1996, 325 to 327).

In the tenter frame process the biaxial orientation of the film is conventionally achieved by drawing the film lengthwise ("machine direction" (MD)) and then, with a tenter, drawing the film in a direction perpendicular to the machine direction ("transverse direction" (TD)).

In machine direction orientation (MDO) the film is running on a heated set of rolls. The temperature of these rolls generally is between 120 to 130 °C, but occasionally some lines are using higher temperatures, e.g. fast running lines.

Fast running lines require higher temperatures in order to allow the stretching, in particular if a propylene homopolymer composition is used, for the production of biaxially oriented films (BOPP films).

Moreover, in BOPP production the general tendency is to increase the line speeds, i.e. to get higher stretch rates.

However, such a film processing usually requires a material with a very broad molecular weight distribution (MWD) to allow stretching at a high process speed.

WO 20044074370 relates to blends of polypropylene comprising low-density polyethylene (LDPE) and high-density polyethylene (HDPE).

However, such compositions reduce the film stiffness, which is a key property for biaxially oriented polypropylene films.

Therefore, the object of the present invention is to provide a biaxially oriented film, which has an improved processability, in particular with respect to a high speed process, while maintaining the good mechanical properties of the biaxially oriented polypropylene film.

The present invention is based on the finding that the above object can be achieved if a propylene homopolymer having a high melt flow rate (MFR) is used as an internal lubricant in the film composition.

Therefore, the present invention provides a biaxially oriented film comprising one or more layers, where at least one layer comprises a polypropylene base resin which comprises
a. a propylene polymer (A) and
b. a propylene polymer (B) having a melt flow rate (230°C/2.16kg) of at least 400 g/10 min,
wherein the propylene polymer (A) has a lower melt flow rate than propylene polymer (B).

The utilisation of a propylene polymer having a high melt flow rate as an internal lubricant results in reduced stretch forces and wider processing windows in a high speed process, while maintaining the mechanical properties of the biaxially oriented film.

The biaxially oriented film of the invention may be a single or multi-layer film. It is preferred, that a layer containing the propylene base resin constitutes at least 50 wt% of the total film, more preferably at least 70 wt%, most preferably at least 80 wt%.

One or more additional layers may be present if the film of the invention is a multilayer film. These additional layer(s) have for example the purpose of providing the required sealing properties to the film.

Exemplary film structures are e.g. three layer films having a total thickness of 20 or 30 µm, in each case with two exterior sealing layers of 1 µm each.

The term "base resin" denotes the entirety of polymeric components in the layer according to the invention. Preferably, the base resin is consisting of propylene polymers (A) and (B).

The term "propylene polymer" as used herein is intended to mean both propylene homo- and copolymers.

In the present invention the layer preferably comprises at least 90 wt% of the base resin, more preferably at least 95 wt%, and most preferably at least 98 wt%, based on the total layer.

It is preferred that the polypropylene base resin of the present invention contains 90 to 99.9 wt%, more preferred 92 to 99.8 wt% and most preferred 94 to 99 wt% of propylene polymer (A).

According to a further embodiment of the present invention the propylene polymer (A) and/or the propylene polymer (B) of the polypropylene base resin contain up to 2 wt% of ethylene and/or C₄-C₈ alpha-olefin comonomers, preferably up to 1 wt%.

A preferred comonomer is ethylene. If ethylene is used as comonomer, it is preferably used in an amount of 0.1 to 1 wt%, more preferably 0.2 to 0.7 wt%, most preferably 0.2 to 0.5 wt%.

According to a preferred embodiment, both propylene polymers (A) and (B) are homopolymers.

According to a further embodiment of the present invention, propylene polymer (A) contains ethylene as comonomer and propylene polymer (B) is a homopolymer.

Polymer (B) of the present invention is preferably used in an amount of 0.1 to 10 wt.-%, more preferably of 0.2 to 8 wt%, based on the total polypropylene base resin.

The melt flow rate (MFR) of the propylene polymers are determined according to ISO 1133 with a load of 2.16 kg at 230 °C.

The melt flow rate of propylene polymer (B) is at least 700 g/10min. Furthermore, it is preferred that the melt flow rate of polymer (B) is at least of 900 g/10min and more preferred at least of 1000 g/10min. In the present invention, the upper limit of the melt flow rate of propylene polymer (B) preferably is 3000 g/10 min, more preferably 2000 g/10 min, most preferably 1500 g/10 min.

Propylene polymer (A) has a lower melt flow rate than the propylene polymer (B). Preferably, propylene polymer (A) has a melt flow rate of 0.1 to 25 g/10min (230°C/2.16 kg), more preferably from 0.1 to 15 g/10min and most preferably from 1.0 to 10 g/10min.

The propylene polymers of the present invention may be produced by any polymerisation process known in the art.

The polymerisation process may be a continuous process or a batch process utilising known methods and operating in liquid phase, optionally in the presence of an inert diluent, or in gas phase or by mixed liquid-gas techniques. The process is preferably carried out in the presence of a stereospecific catalyst system.

As catalyst any ordinary stereospecific Ziegler-Natta catalysts can be used. An essential component in those catalysts are solid catalyst components comprising a titanium compound having at least one titanium-halogen bond, an internal electron donor compound and a magnesium halide in active form as a carrier for both the titanium component and the donor compound. The catalysts may contain - as internal electron donor - compounds selected from ethers, ketones, lactones, compounds containing N, P and/or S atoms and esters of mono and dicarboxylic acids.

A further essential component of the catalyst is an organoaluminium compound, such as an alkylaluminium compound. Additionally, an external electron donor is generally used.

To obtain the propylene polymers, it is preferred to use a polymerisation process based on at least one reactor and an optional second polymerisation step comprising at least one gas phase reactor.

Before the catalyst system is used in the actual polymerisation process it is optionally pre-polymerised with small amounts of alpha-olefins in order to enhance catalyst performance and to improve the morphology of the end product.

In the first step of the process the optionally prepolymerised catalyst system and a monomer feed comprised of propylene, and optionally one or more of ethylene and C₄-C₈ alpha-olefins is fed into a reactor. The C₄-C₈ alpha-olefin can be any one or mixtures of 1-butene, 1-pentene, 4-methyl-1-pentene, 1-hexene, 1-heptene or 1-octene. Particularly preferred is ethylene.

Polymerisation can be carried out in the presence of the previously mentioned organoaluminium compound and an external donor compound at temperatures lower than 90 °C and pressures in the range of 10 to 90 bar, preferably 30 to 70 bar. The polymerisation is carried out in such conditions that 50 to 100 wt%, preferably 75 to 99 wt% of the end product is polymerised in the first reactor. Hydrogen is added, when desired, into the first reactor for adjusting the molecular weight of polymer, as conventional.

Any metallocene catalyst capable of catalysing the formation of a propylene polymer can also be used. A suitable metallocene catalyst comprises a metallocene/activator reaction product impregnated in a porous support at maximum internal pore volume. The catalyst complex comprises a ligand which is typically bridged, and a transition metal of group IVa to VIa, and an organoaluminium compound. The catalytic metal compound is typically a metal halide.

After the polymerisation in the first reactor, the reaction medium is optionally transferred into a second reactor, which may be a gas phase reactor.

In the optional second reactor, 0 to 50 wt%, preferably 1 to 25 wt% of the final polymer is formed. In the second reactor the polymerisation may be carried out at a temperature of 60 to 90 °C and at a pressure higher than 5 bar, preferably higher than 10 bar. Optionally, propylene and other monomers can be added into the second reactor. Hydrogen may also be added into the gas phase reactor, if desired. In a similar manner, polymerisation can optionally be continued in still further reactors.

The precise control of the polymerisation conditions and reaction parameters is within the state of the art. After the polymerisation in the first and the optional second reactor is finished, the polymer product is recovered by conventional procedures.

The resulting polymer particles may be pelletised in a conventional compounding extruder with various additives, which are generally used in thermoplastic polymer compositions, such as stabilisers, antioxidants, acid neutralising agents, ultraviolet absorbers, antistatic agents, etc.

The above process description for producing the polymers used in the present invention is equally applicable to propylene homopolymers as well as propylene copolymers. One skilled in the art is aware of the various possibilities to produce propylene homo- and copolymers and will simply find out a suitable procedure to produce suitable polymers which are used in the present invention.

The MFR of propylene polymer (B) may be achieved by selecting appropriate polymerisation conditions as described above. Alternatively, the high MFR of propylene polymer (B) can be obtained by peroxide-induced degradation ("visbreaking") of a propylene polymer having a higher molecular weight and thus a lower MFR in order to increase its MFR and to make it suitable for the present invention.

The propylene polymer (B) may be added to the propylene polymer (A) by any known method in the art.

However, in the present invention it is preferred that the propylene polymer (B) is added to the base polymer (A) in the pelletising step or during the extrusion process before the actual film forming process by means of a gravimetric or volumetric dosing system (cfr. masterbatch dosing system). Dry blending of the different components before the film forming process is also an option.

It is also possible to prepare the polymer compositions by the use of multiple reactors operated in series, whereby the polymer (A) is formed in one or more reactors and the polymer (B) is prepared in another.

Moreover, it has been found that the processability of the biaxially oriented film is most improved if propylene polymer (B) is preferably used in an amount of 0.5 to 5 wt%, more preferably of 1 to 3 wt.-%, based on the total polypropylene base resin. According to a particularly preferred embodiment the propylene polymer (B) is used in an amount of about 1.5 wt.-% based on the total polypropylene base resin.

The addition of the polymer (B) behaves like an internal lubricant and it thus reduces the stretch force in BOPP stretching. In practice, the lower stretch force means that the polymer can be stretched at higher speeds compared to the unmodified polymer (A).

A further embodiment of the present invention is to provide a process for the production of biaxially oriented films.

In the process of the present invention, a polypropylene base resin, which comprises
a. a propylene polymer (A) and
b. a propylene polymer (B) having a melt flow rate (230°C/2.16kg) of at least 400 g/10 min, and
in which propylene polymer (A) has a lower melt flow rate than propylene polymer (B), is formed to a film and biaxially stretched.

The biaxial stretching is usually carried out in a tubular (bubble) or tenter frame process. Both technologies are described in detail in A. Ajji and M. M. Dumoulin, Biaxially Oriented Polypropylene (BOPP) Process in J. Karger-Kocsis (Ed.) Polypropylene: An A-Z reference, Kluwer, Dordrecht 1999, 60-67. Orientation and properties are determined by the draw ratio and details of the process; the films have generally the highest cristallinity and stiffness achievable.

Stretch ratios can be up to 10, in the Machine Direction Orientation (MDO) the stretch ratio is usually between 4 and 5.5. In the Transverse Direction Orientation (TDO) the stretch ratio is typically between 7 and 10.

Furthermore, the process of the present invention preferably is a high speed process: In the present invention, high speed process means that the process for producing BOPP film has an output speed of at least 200 m/min. 550 m/min are possible for newest technologies.

Optionally, additives conventionally used in polyolefin-based film materials, for example anti-oxidants, neutralizer, fillers, anti-blocking agents, or antistatic agents may be added to the polypropylene base resin before, during or after the polypropylene base resin is formed to a film.

Usually, the amount of such conventional additives is 4 wt.-% or less, based on the total polypropylene base resin.

A further aspect of the invention relates to a polypropylene base resin, which is used in the production of biaxially oriented films and comprises
a. a propylene polymer (A) and
b. propylene polymer (B) having a melt flow rate (230°C/2.16kg) of at least 400 g/10 min, and
in which propylene polymer (A) has a lower melt flow rate than propylene polymer (B).

The biaxially oriented film of the present invention may be used for a variety of applications, but preferably in packaging applications, e.g. for food packaging.

### 1. Measurement methods

### a) Stretch data

Stretch data were measured for a 20 µm BOPP film produced on a Karo IV stretch frame. Karo IV is a laboratory film stretcher for biaxial discontinuous film and sheet orientation in the sequential as well as in the simultaneous stretching mode. It assesses the stretching behaviour of films and sheets in a simple and economical manner.
Film thickness range: 20 - 2000 µm
Max stretch ratio 10:1. Stretching speeds can be selected between 0.1 m/sec and 0.5 m/sec. Stretching of films can be done at different temperatures and with different stretch ratio's. It provides an indication of the processing window for a material.

### b) MFR

The Melt flow rates were measured with a load of 2.16 kg at 230°C. The melt flow rate is that quantity of polymer in g which the test apparatus, standardized to ISO 1133, extrudes within 10 minutes at a temperature of 230°C under a load of 2.16 kg.
c) **Mw, Mn, MWD:** The weight average molecular weight **(Mw)** and number average molecular weight **(Mn)** and thus the molecular weight distribution **(MWD,** Mw/Mn) of polymers were determined with a Millipore Waters ALC/GPC operating at 135 °C and equipped with two mixed bed and one 107 Å TSK-Gel columns (TOSOHAAS 16S) and a differential refractometer detector. The solvent 1,2,4-trichlorobenzene was applied at a flow rate of 1 ml/min. The columns were calibrated with narrow molecular weight distribution polystyrene standards and narrow and broad polypropylenes.

### 2. Examples

**Polymer 1**: Homopolymer, MFR (230 °C, 2.16 kg) = 1.6 g/10 min; MWD (M_{w}/Mₙ) = 4.2
**Polymer 2**: Homopolymer, MFR (230 °C, 2.16 kg) = 3 g/10 min; MWD (M_{w}/Mₙ) = 6.3
Additives: Irganox B 215: 1100 ppm (1:2 mixture of Irganox 1010 (CAS 6683-19-8) and Irgafos 168 (CAS 31570-04-4)

Synthetic hydrotalcite (SHT): CAS 11097-59-9: 100 ppm
**Polymer 3:** Homopolymer, MFR (230 °C, 2.16 kg) = 1200 g/10 min
Additives: Ca stearate: 300 ppm 300 ppm, Irganox 1010: 6683-19-8: 1000 ppm
**Inventive Example:** 98,5 wt% Polymer 1 and 1,5% wt% polymer 3 were compounded (MFR (230 °C, 2.16 kg) = 3,2 g/10 min).

The following additives were used. Amounts of additives are based on the sum of weights of polymer 1 and polymer 3.
Dovernox D-911 (CT): 1200 ppm (1:1 mixture of Irganox 1010 (CAS 6683-19-8) and Doverphos 9228 (CAS 154862-43-8))
Synthetic hydrotalcite (SHT): CAS 11097-59-9: 200 ppm

### Comparative Example: 100 wt% Polymer 2

Table 1 shows stretch data for 20 µm biaxially oriented film produced on the Karo IV Stretch frame. The test was conducted comparing the polypropylene composition according to the present invention with the composition according to the comparative example. Both grades demonstrate comparable stretch forces over the temperature range 150 to 160 °C.

Samples of about 85 mm x 85 mm were cut from a cast-film (with film thickness of 1.2 mm) for biaxial drawing in the laboratory film stretcher KARO IV (Brückner Maschinenbau GmbH, Siegsdorf, Germany). The drawing was performed at temperatures in the range of 150 -160°C at a stretch ratio (7 in MD and 7 in TD with a stretch speed of 7.6 m/min and a preheat time of 70s) and the respective stretch forces were measured.

**Table 1**

| | **MD orientation** | | | **TD orientation** | | |
|---|---|---|---|---|---|---|
| | 150°C | 155 °C | 160°C | 150 °C | 155 °C | 160 °C |
| Stretch force in N | | | | | | |
| **Inventive Example** | 70 | 54 | 16 | 70 | 55 | 15 |
| **Comparative Example** | 77 | 45 | 8 | 78 | 45 | 6 |

## Claims

1. A biaxially oriented film comprising one or more layers, where at least one layer comprises a polypropylene base resin which comprises
a. a propylene polymer (A) and
b. a propylene polymer (B) having a melt flow rate (230°C/2.16kg) of at least 400 g/10 min,
wherein the propylene polymer (A) has a lower melt flow rate than propylene polymer (B).

2. A biaxially oriented film according to claim 1, wherein the content of propylene polymer (A) is from 90 to 99.9 wt%, based on the total polypropylene base resin.

3. A biaxially oriented film according to claims 1 or 2, wherein the content of propylene polymer (B) is from 0.1 to 10 wt%, based on the total polypropylene base resin.

4. A biaxially oriented film according to any one of the preceding claims, wherein the propylene polymer (A) and/or the propylene polymer (B) contain up to 2 wt% of ethylene and/or C₄-C₈ alpha-olefin comonomers.

5. A biaxially oriented film according to any one of the preceding claims, wherein the melt flow rate (230°C/2.16kg) of propylene polymer (B) is not higher than 3000 g/10min.

6. A biaxially oriented film according to any one of the preceding claims, wherein the propylene polymer (A) has a melt flow rate (230°C/2.16kg) of 0.1 to 25 g/10 min.

7. A process for the production of a biaxially oriented film comprising one or more layers, wherein a polypropylene base resin, which comprises
a. a propylene polymer (A) and
b. a propylene polymer (B) having a melt flow rate (230°C/2.16kg) of at least 400 g/10 min, and
in which propylene polymer (A) has a lower melt flow rate than propylene polymer (B), is formed into at least one layer of a film and the film is biaxially stretched.

8. The use of a polypropylene base resin for the production of a single or multilayer biaxially oriented film, wherein at least one layer is comprised of the polypropylene base resin which comprises
a. a propylene polymer (A) and
b. a propylene polymer (B) having a melt flow rate (230°C/2.16kg) of at least 400 g/10 min, and
in which propylene polymer (A) has a lower melt flow rate than propylene polymer (B).

9. Use of a propylene polymer (B) having a melt flow rate (230°C/2.16kg) of at least 400 g/10 min as an internal lubricant in the production of a biaxially oriented film comprising a polypropylene base resin which comprises a propylene polymer (A) and said propylene polymer (B), and in which propylene polymer (A) has a lower melt flow rate than propylene polymer (B).

10. Use of a film according to claims 1 to 7 for the production of articles.

11. Use according to claim 10, wherein the articles are food packaging films or capacitor films.

12. An article comprising a film according to claims 1 to 7.
